Europäisches Patentamt

European Patent Office

Office européen des brevets

(11) Publication number: **0 428 399 A2**

# EUROPEAN PATENT APPLICATION

(21) Application number: **90312418.8**

(22) Date of filing: **14.11.90**

(51) Int. Cl.5: **B23D 31/00, B23P 17/06**

(30) Priority: **14.11.89 ZA 898672**

(43) Date of publication of application:
**22.05.91 Bulletin 91/21**

(84) Designated Contracting States:
**AT BE CH DE DK ES FR GB GR IT LI LU NL SE**

(71) Applicant: **Jones, John Albert**
**13 Helia Road, Blairgowrie**
**Johannesburg, Transvaal Province(ZA)**

(72) Inventor: **Jones, John Albert**
**13 Helia Road, Blairgowrie**
**Johannesburg, Transvaal Province(ZA)**

(74) Representative: **Dixon, Donald Cossar et al**
**Gee & Co. Chancery House Chancery Lane**
**London WC2A 1QU(GB)**

(54) **Metal fibres and a machine for their manufacture.**

(57) This invention relates to a machine (1) for manufacturing metal fibres. The machine has a power driven rotatable toothed wheel cutter (4) having a width at least equal to the length of fibre required. The teeth (26) being parallel to the axis (6) of the cutter (4) and there is provided a cutter bed block (25) extending substantially radially from the cutter wheel (4) and a feed mechanism (5) for feeding strip metal (15) of a thickness of the required fibre along the cutter bed block (25) into the path of rotation of the cutter teeth (26) at a speed commensurate with the speed of rotation of the wheel and the width of the fibre required.

FIG. 1

## METAL FIBRES AND A MACHINE FOR THEIR MANUFACTURE

This invention relates to metal fibres and more particularly to the manufacture of metal fibres which may be used to provide an improved toughness index, impact resistance and flexural strength in cementitious material.

It has been known for more than half a century that the introduction of steel fibres into cementitious mixes greatly increases the toughness index, impact resistance and the flexural strength of the resultant products. The introduction of these fibres increases the costs of production but enables panels and coatings of much thinner dimensions to be used than would be the case without their introduction.

Coatings of cementitious materials are widely used and often applied by guniting or shotcrete processes involving spraying a wet or dry mix of cementitious material onto a matrix. This process is frequently used in underground mining operations to retail loose material in the walls of mine workings.

In circumstances such as these it has been found essential that the cementitious material has a maximum toughness index and flexural strength in order to be properly useful for its purpose. Steel fibres have been added to the cementitious mixture prior to its application to the matrix through a spray gun. The spray gun sets size limitations on the fibres which may be used to reinforce the flexural strength of the mixture and thus the fibres should be accurately made to meet these requirements while also being economical to produce.

Generally the fibres should not be larger than half the diameter of the pipe through which the mixture is delivered. These are factors which are well known to those skilled in the art.

Also encountered with these blasting type applications of fibre reinforced cementitious materials is the problem of "rebound" which results in the material failing to adhere to the matrix.

The effect of the fibres in the cementitious material in which they are used is directly related to the pull-out strength they provide. Thus fibres of non-uniform shape along their length and having a large aspect ratio are highly desirable.

As far as the Applicant is aware fibres have been provided from drawn wire or by cutting from strip material using reciprocating cutters. Both of these processes are slow and result in high cost of production of the fibres. The most common of the fibres produced are carbon steel fibres, electrolysis coated steel fibres and those made from the less corrosion resistant types of stainless steel.

It is the object of the present invention to provide fibres of the type referred to and the machine for their manufacture, wherein the fibre produced will have a shape providing a high pull-out strength as well as providing a suitable predetermined aspect ratio. It is a further object that the fibres be produced inexpensively and at high speed.

According to this invention there is provided a machine for manufacturing metal fibres comprising a power driven rotatable toothed wheel cutter having a width at least equal to the length of fibre required, the teeth being parallel to the axis of the cutter, a cutter bed block having a cutting edge with the block extending substantially radially from the cutter wheel, and a feed mechanism for feeding strip metal of a thickness of the required fibre along the cutter bed block into the path of rotation of the cutter teeth at a speed commensurate with the speed of rotation of the wheel and the width of the fibre required.

This invention also provides for the feed mechanism to comprise a pair of rollers one of which is driven in synchronism with the cutter wheel, and a constraining guide extending away from the operative edge of the cutter bed block, for the undriven roller to be adjustable towards and away from the driven roller and resiliently biased towards the latter and for the cutter wheel and feed roller to be positively driven through separate electric motors operating in synchronism.

Further features of this invention provide for the face of the cutter bed block adjacent its cutting edge to have evenly spaced recesses formed therein across its width, and for the cutter teeth to be formed as inserts into the periphery of the wheel and projecting therefrom with the cutting face inclined forwardly at a small angle to radius of the wheel at the point of insert and for the inserts to be provided with a relieving rake.

Still further features of this invention provide for there to be a plurality of cutter wheels and mechanisms driven in unison and located in side by side relationship, for each feed mechanism to be independently and individually adjustable and for the cutting teeth on adjacent wheels to be offset from each other in the direction of rotation of the wheels.

These and other features of this invention are described below with reference to the accompanying drawings illustrating one preferred embodiment of the invention.

In the drawings

Figure 1 and 2 are oblique views of the machine

Figure 3 is a side view of the feed mechanism

Figures 4 and 5 illustrate a metal fibre made by the machine

Figure 6 is a detail of the cutting assembly and

Figure 7 a detail of an alternative feed assembly.

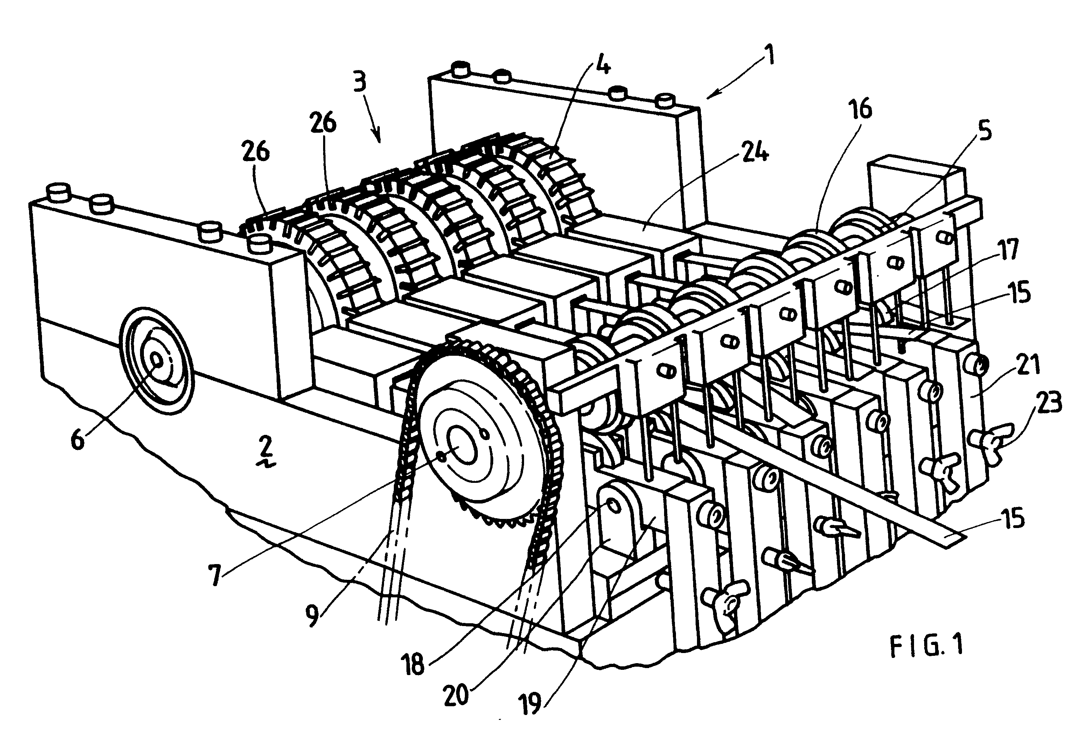

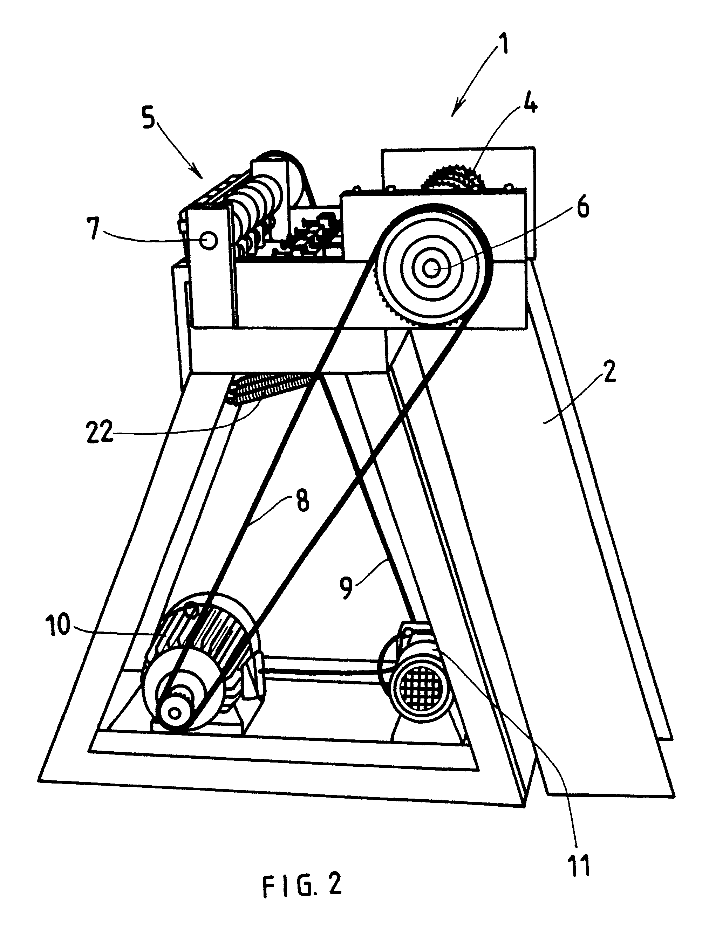

As shown in Figures 1 and 2 the machine (1) for manufacturing steel fibres has a stand (2) supporting a plurality of fibre cutting assemblies (3) arranged in a side by side relationship.

Each assembly consists of a circular toothed cutter wheel (4) and a feed mechanism (5) with all the cutters and the driven rollers (described more fully below) mounted on single shafts (6) and (7). The shafts (6) and (7) have sprocket and chain drives (8) and (9) to separate electric motors (10) and (11). The motors (10) and (11) are run in synchronism so that the feed will be such that each tooth of each cutter wheel will cut a fibre of predetermined width from a strip of steel fed by the feed mechanism.

It is to be noted that the teeth of the adjacent cutter wheels are offset from each other in the direction of rotation of the wheels so that only one fibre is cut at a time.

This reduces the power required for operation of the machine compared to that which would be necessary if all the cutters cut simultaneously.

The machine illustrated has six cutter wheels and conventionally may have 30 cutting teeth on a wheel diameter of about 150 mm. If the cutters are driven at only 500 RPM the machine will nevertheless produce 90 000 fibres per minute which is highly economical compared to any other fibre production process known to the Applicant.

The machine enables fibres having a length equal to the width of the cutters or less to be made from strip steel. The thickness of the steel is the thickness of the fibres cut and the width of the fibre is determined by the relationship between cutter speed and feed speed. Preferably the fibres have a substantially square cross section.

Experience has shown that fibres between 20 mm and 30 mm in length and 0.5 mm square in cross section give satisfactory mixing capability in cementitious mixes and also the shape gives a good grip to the cement. This grip may be enhanced in known manner by additives to the cementitious mix such a silica fume or fly ash for example.

Figures 4 and 5 illustrates a typical fibre (12) according to this invention. It will be immediately appreciated that this fibre does not rely only on its square section for its pull out characteristic. The fibre illustrated is representative of a 25 mm long fibre and it has six ribs (13) formed therein equidistantly spaced part at 4 mm distances. The ribs (13) are provided by deforming the fibre transverse to its length an amount equivalent to half the thickness of the fibre. This "roughening" of the fibre along its length greatly enhances the adherence of the cementitious mix and consequently the pull out strength. The manner in which this shaping is automatically achieved is described below.

The deformation of the fibre as described above is made in the direction of the thickness of the fibre material. Further keying formations (14) are provided in the width of the fibre and it will readily be understood that the ribs (13) and formations (14) increase the pull-out strength of the fibres from cementitious material in which they are embedded, to a very considerable degree.

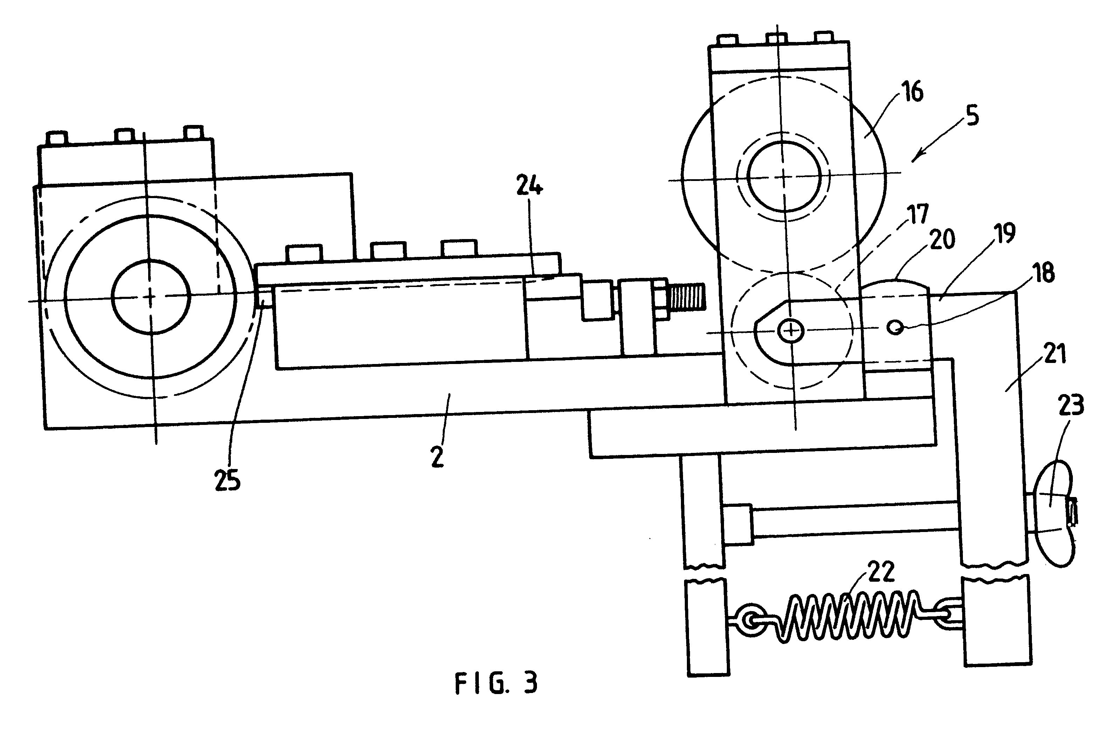

A very convenient feed mechanism (5) for the strip material (15) is illustrated in Figure 1 and Figure 3.

The shaft (7) has feed rollers (16) mounted thereon to rotate in synchronism with the cutter wheels (4) as set out above. The surface of the rollers is knurled to provide a firm drive on the strip (15).

Directly below each feed roller (16) is a co-operating roller (17) rotatable on an independent shaft (18) mounted on an arm (19) pivotally supported in a bifurcated mounting (20) secured in the stand (2). The end of arm (19) remote from roller (17) has a lever (21) secured thereto and conveniently integral therewith. This lever is springloaded by means of tension spring (22) anchored to the frame (2). A simple locking device (23) is provided which prevents unintentional release of the effect of spring (22). The tension that the spring can apply and thus control the pinching on the strip (15) between the feed roller (16) and co-operating roller (17) is preferably adjustable.

The use of an independant feed mechanism (5) for each cutter assembly enables a strip to be fed to a cutter wheel (4) without the necessity to stop either of the drive motors. The locking device (23) is released and the lever (21) moved against effect of spring (22) to move the co-operating roller out of its operative position thus enabling a new strip to be fed into the assembly without any interference with or interruption of the other cutter wheel operations.

The strip (15) is fed through a guide (24) to the cutter wheel (4). This guide (24) constrains any lateral movment of the strip but makes provision for a limited and predetermined buckling of the strip in the direction of its thickness.

The buckling can occur because inspite of the synchronism of the cutter speed and feed the cut through the strip takes a finite time during which the end of the strip at the cutter is held stationary while the feed assemblies continue to feed the strip towards the cutter. When the cut is completed the buckling of the material straightens out under the inherent resilience of the strip, and the movement of the cut end is accelerated to bring the strip into the proper position for cutting by the next tooth of the cutter wheel.

Cut material is collected in the stand below the cutters for weighing and packaging and despatch.

It will be appreciated that because the different strips can be individually controlled the machine can be easily operated by a single operator. Even if one cutter becomes non-functional the machine can produce from the remaining cutters without interruption.

At the forward end of each guide (24) is a cutter bed block (25) associated with each cutter wheel (4).

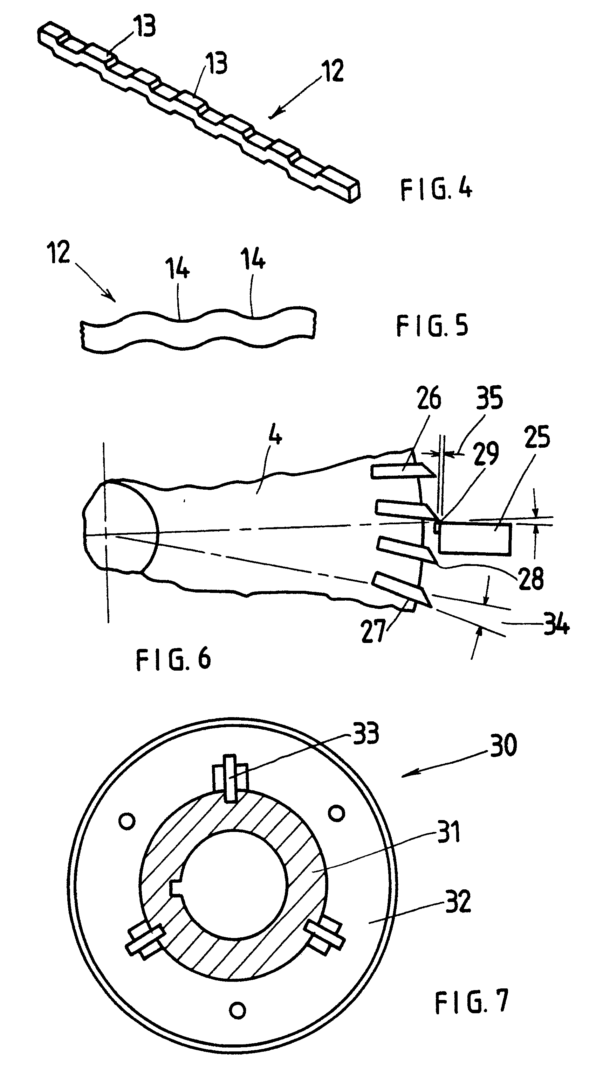

As shown in Figure 6, each cutter wheel (4) has the cutting teeth (26) provided by inserts of suitably hard cutting material such as tungsten carbide. The angle of the surface (27) of the insert which provides the cutting edge (28) is inclined at a small angle (34) to the radial in the forward direction. In practice it has been found that an angle of $7\frac{1}{2}$ % is very satisfactory.

Also to enable the fibres produced to be accurately cut there should preferably be a clearance (35) of about 5% of the thickness of the strip being cut. Also the cutting edge of the cutter bed block (25) should be elevated above the radial line at which the cutting edge (28) would be closest to the cutter bed block if it were not relieved below its cutting edge. The distance that this edge should be elevated has been found in practice to be about half the thickness of the strip being cut.

Referring back to Figures 4 and 5 the fibre illustrated is obtained by having the shape of the cutting edges of the wheel teeth and cutter bed block complementarily shaped to give the desired configuration to the width of the fibre.

The ribs are formed by having recesses in the top face of the cutter bed block (25) as shown in Figure 6 at the cutting edge (29). It has been found that the cutting action between cutter wheel (4) and cutter bed block (25) causes coining of the strip material into the recesses. This coining is facilitated by proving the cutter teeth with a shear angle of $1\frac{1}{2}$ °. Thus the ribs (13) are formed automatically and the shape of the co-operating cutting edges provide the keying formations in a plane at right angles to the depth of the ribs (13). The result is the fibre illustrated in figures 4 and 5.

Generally it has been found that the machine described above can be best operated when the strip has a hardness of about 70 to 80 on the Rockwell B scale.

Many modifications to the machine above described can be made without departing from the scope of this invention.

For example the feed mechanism may be different from that described. An electric step motor could be used in synchronisation with the cutter wheel drive and it is also possible but not preferable to cut fibres with a pressure feed and utilise the buckling of the strip described above to feed it stepwise into the cutter wheel.

With this type of feed it is also possible to give a further resilience to the feed by means of the feed roller (30) illustrated in Figure 7. In this form the roller (30) comprises a central bush (31) to be secured to the drive shaft and the bush (31) is connected to an outer sleeve (32) by radial leaf springs (33). These leaf springs will deflect and straighten to compensate for relative rotational movement between the bush and sleeve and also to some extent accommodate a stepwise feed of the strip.

Obviously also the particular cutter teeth and bed block can be varied and result in differently shaped fibres.

The invention provides a machine for manufacturing metal fibres at high speed which is of simple construction and easy to operate without the use of skilled labour.

## Claims

1. A machine for manufacturing metal fibres, charaterized in that the machince has;
a power driven rotatable toothed wheel cutter (4) having a width at least equal to the length of fibre required, the teeth (26) being parallel to the axis (6) of the cutter, a cutter bed block (25) having a cutting edge (29) with the block (25) extending substantially radially from the cutter wheel and a feed,mechanism (5) for feeding strip metal (15) of a thickness of the required fibre along the cutter bed block (25) into the path of rotation of the cutter teeth (26) at a speed commensurate with the speed of rotation of the wheel (4) and the width of the fibre required.

2. A machine as claimed in claim 1 in which a plurality of cutters and feed mechanisms are arranged side by side to be driven in unison.

3. A machine as claimed in claim 1 in which the feed mechanism (5) comprises a pair of rollers (16 and 17) one (16) of which is driven in synchonism with the cutter wheel (4), and a constraining guide (24) extending away from the operative edge of the cutter bed block.

4. A machine as claimed in claim 3 in which the undriven roller (17) is adjustable towards and away from the driven roller (16) and resiliently biased towards the latter.

5. A machine as claimed in claim 3 in which the cutter wheels and feed rollers are positely driven through separate electric motors (10 and 11) operating in synchronism and at reduced speed.

6. A machine as claimed in claim 3 in which the cutter wheel (4) is driven by an electric motor through speed reduction means and the feed roller by an electric step motor.

7. A machine as claimed in any one of the preceding claims in which the face of the cutter bed block (25) adjacent the cutting edge (29) has evenly spaced recesses formed therein across its width.

8. A machine as claimed in any one of the preceding claims in which the cutter teeth (26) are formed as inserts into the periphery of the wheel (4) and projecting therefrom with the cutting face (27) inclined forwardly at a small angle (34) to a radius of the wheel at the point of insert.

9. A machine as claimed in claim 8 in which the cutter inserts are provided with a relieving rake.

10. A machine as claimed in claim 8 in which the inserts are made of tungsten carbide.

11. A machine as claimed in claim 1 in which the clearance between cutting edges of the cutter wheel and cutter bed block is about 5% of the thickness of the material being cut.

12. A machine as claimed in claim 1 in which the cutting edge (28) of the cutter bed block (25) is located a distance of about half the thickness of the material being cut above the point of closest proximity between the cutter wheel (4) and cutter block (25).

13. A machine as claimed in claim 2 in which the cutting teeth (26) of the cutter wheels are offset from each other in the direction of rotation of the wheels.

14. A machine as claimed in claim 2 in which the feed mechanism and cutter bed blocks are individually adjustable.

FIG.1

FIG. 2

FIG. 3

EP 0 428 399 A2

FIG. 4

FIG. 5

FIG. 6

FIG. 7